# FASCICULE DE BREVET EUROPEEN

(11) **EP 0 349 075 B1**
(45) Date de publication et mention de la délivrance du brevet: **15.02.1995**
(21) Numéro de dépôt: 89201673.4
(22) Date de dépôt: 26.06.1989
(51) Int. Cl.: G06T 5/40

(54) **Méthode numérique de modification d'image et système de mise en oeuvre**
Digitales Verfahren und System zur Bildveränderung
Digital method and system for picture modification

(30) Priorité: 01.07.1988 FR 8808918
(43) Date de publication de la demande: 03.01.1990
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Paulin, Jacques, F-75007 Paris (FR)
(74) Mandataire: Charpail, François

(56) Documents cités:
- FR-A- 2 555 003

## Description

La présente invention a pour objet une méthode numérique de modification d'image pour obtenir une image de sortie à partir d'une image d'entrée définie par un ensemble d'éléments d'image, ou pixels, chaque pixel comportant au moins une valeur numérique définissant son niveau de gris parmi un ensemble de valeurs possibles, la dite méthode comprenant :
- une première étape pour établir l'histogramme représentatif de la répartition en pourcentage des niveaux de gris des pixels de la dite image d'entrée,
- une deuxième étape pour établir, à partir des caractéristiques de répartition du dit histogramme, une fonction de correspondance entre les niveaux de gris d'entrée et de sortie,
- une troisième étape pour construire l'image de sortie sur la base des pixels de l'image d'entrée et de la dite fonction de correspondance, cette dernière consistant à écrêter des pixels ayant des niveaux de gris extrêmes et à redistribuer linéairement les niveaux de gris des pixels restants, cet écrêtage étant réalisé selon la revendication 1.

La présente invention a aussi pour objet un système numérique selon la revendication 7 agencé pour mettre en oeuvre cette méthode.

Cette méthode s'applique aux images faiblement contrastées, notamment les images infra-rouge dont la faible dynamique sur l'échelle des brillances est bien connue. L'histogramme d'une image numérisée de faible contraste occupe seulement une petite partie des niveaux de gris disponibles.

Pour rehausser le contraste, il est connu de redistribuer linéairement, après écrêtage des extrêmes, les niveaux de gris d'entrée sur tous les niveaux de gris disponibles ; toutefois cette méthode présente au moins deux inconvénients car il a été constaté que premièrement dans le cas où l'histogramme d'entrée est assez étalé il y a quand même un gain de contraste qui est inutile et parfois néfaste, deuxièmement dans le cas de certaines images contenant de petits objets chauds sur fond gris, l'écrêtage d'un pourcentage pré-fixé de pixels extrêmes a pour résultat de faire disparaître ces petits objets ce qui va à l'encontre du but recherché.

La présente invention a pour but de supprimer ces inconvénients.

Selon la présente invention une méthode numérique de modification d'image est particulièrement remarquable en ce que l'écrêtage des pixels extrêmes s'effectue à partir d'une valeur de niveau de gris d'entrée spécifique pour chaque image et déterminée pendant la dite deuxième étape, la dite valeur étant choisie pour que le niveau de gris corresponde à un changement de pente significatif de la courbe de l'histogramme, lequel changement de pente est situé entre des premier et deuxième pourcentages cumulés prédéterminés, à une valeur de niveau de gris pour laquelle un changement de pourcentage cumulé de 0,5% demande au moins le franchissement de 5 niveaux de gris pour une échelle de niveaux de gris comportant 128 valeurs disponibles.

Une telle méthode utilise plus finement l'histogramme de l'image d'origine car, du fait que la valeur d'écrêtage est variable d'une image à l'autre, les petits objets chauds ne sont pas détruits. La recherche du point de changement de pente de l'histogramme est, à cet égard, tout à fait significative : la valeur du changement de pente pour l'écrêtage est avantageusement recherchée parmi les valeurs de gris situées entre deux valeurs de pourcentages cumulés notamment 5% et 1%, la recherche pouvant s'effectuer par pas de 0,5% pour trouver, dans le cas de 128 niveaux de gris disponibles, le franchissement d'au moins 5 niveaux de gris ce qui est significatif d'une pente suffisante pour satisfaire le but recherché.

En outre, dans une forme préférée de réalisation de l'invention, au moins les pixels d'entrée d'un des extrêmes sont restitués selon une fonction de transfert qui accentue le contraste.

Dans les méthodes connues, le contraste des pixels extrêmes écrêtés n'était tout simplement pas restitué dans le but d'accentuer le contraste de l'ensemble en augmentant la pente de la fonction de transfert purement linéaire. On voit bien ici l'avantage procuré par la présente invention qui ne cherche pas essentiellement à accentuer le contraste de l'ensemble de l'image mais qui cherche, même au prix d'une légère perte de contraste sur les pixels de niveaux de gris moyens, à accentuer fortement le contraste des niveaux de gris extrêmes ; le but recherché est de préserver le contenu informationnel de l'image, lequel contenu provient souvent des pixels de niveaux de gris extrêmes.

Selon le type d'image, on peut choisir de restituer soit un seul extrême, chaud ou froid, soit les deux.

Dans le cas d'images infra-rouge il est préférable de n'accentuer le contraste que des objets chauds c'est à dire brillants; en effet, et notamment dans le cas des applications militaires, exemple vision de nuit ou par brouillard..., les petits objets chauds sont les plus intéressants : fantassin, tube de canon qui vient de tirer,... .

Une fonction de transfert avantageuse pour accentuer le contraste est la fonction racine carrée; en effet elle est simple à programmer dans un calculateur.

Globalement la méthode selon l'invention présente l'avantage d'améliorer notablement les images de faible contraste sans détériorer les images dont le contraste est satisfaisant.

De plus la mise en oeuvre de l'invention est suffisamment simple de telle sorte que, elle convient à un usage dit "temps réel" c'est à dire avec une caméra ou une lunette de vision; dans ce cas les images successives se présentent à une cadence relativement élevée et les calculs nécessités par la méthode ne doivent pas introduire un retard prohibitif.

La présente invention sera mieux comprise avec la description non limitative d'un exemple de réalisation illustré par des figures.

Les figures 1a et 1b montrent des fonctions de transfert connues.

Les figures 2, 2a, 2b montrent des fonctions de transfert conformes à l'invention.

La figure 3 montre une zone extrême de l'histogramme.

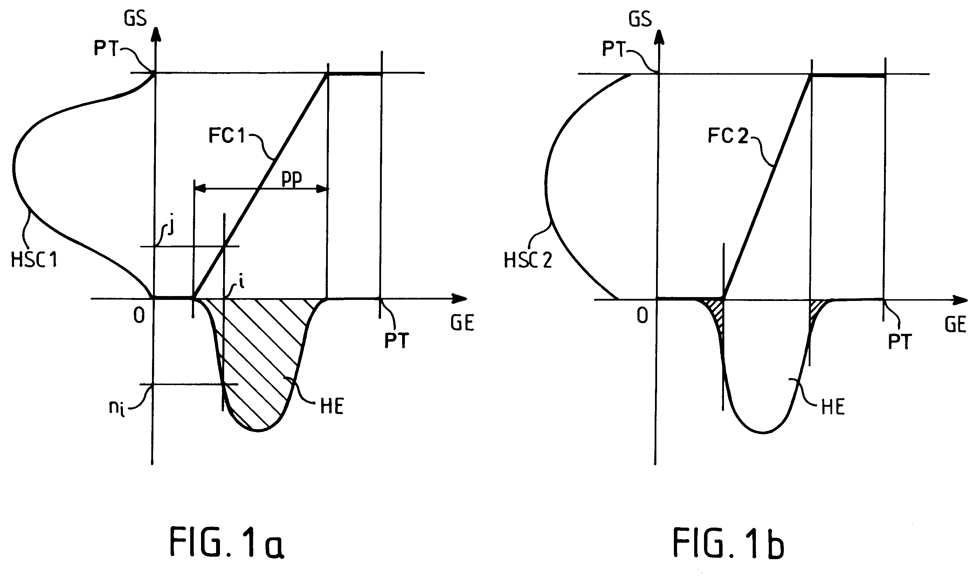

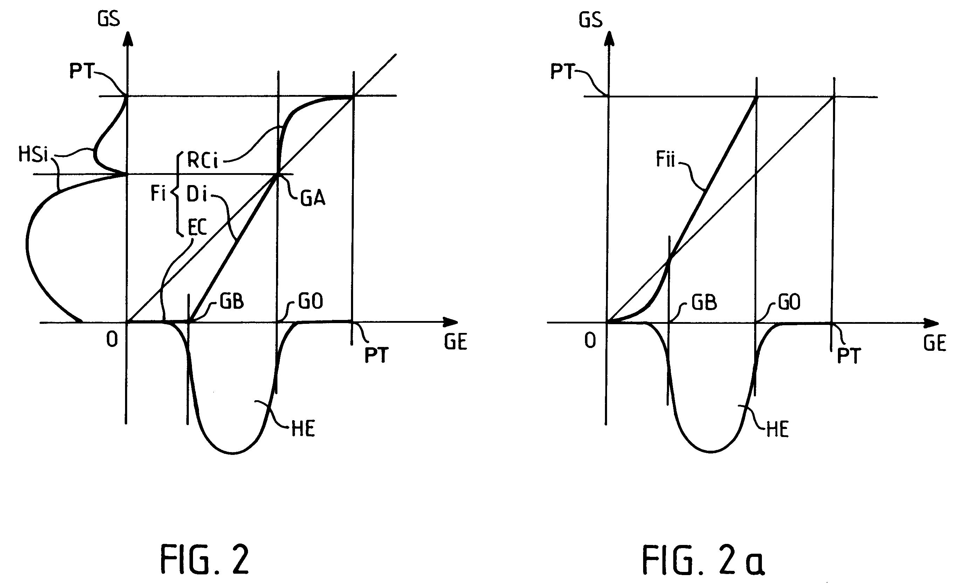

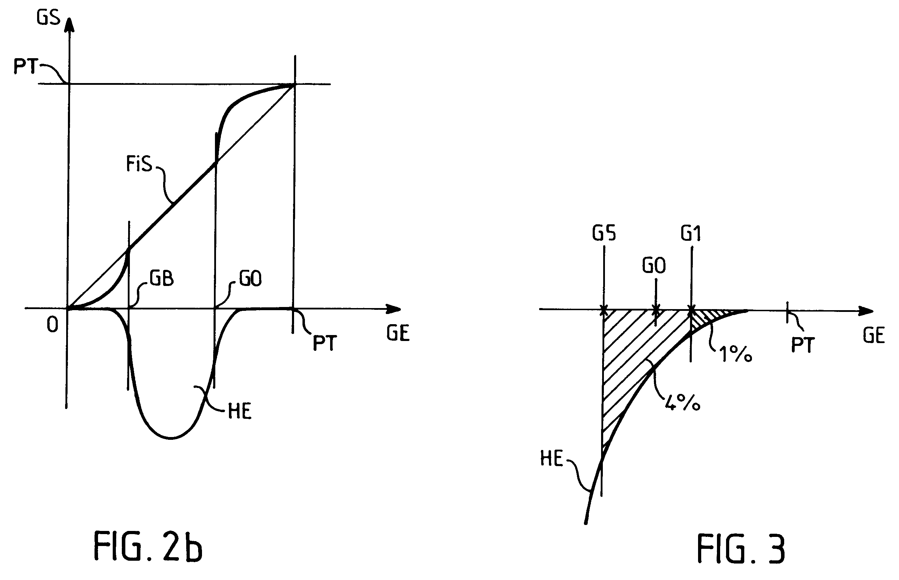

Les figures 1 et 2 se présentent de la même façon à savoir :
- l'axe horizontal GE représente l'échelle des niveaux de gris en entrée lesquels niveaux ont une plage totale de valeurs possibles qui va de O à PT.
- l'axe vertical GS représente l'échelle des niveaux de gris en sortie dont les niveaux possibles sont les mêmes de O à PT.
- à titre d'exemple les trois figures comportent un histogramme d'entrée HE identique pour mettre en évidence qu'avec des fonctions de transfert Fxx différentes on obtient des histogrammes de sortie HSxx différents.
- l'histogramme HE est faiblement contrasté du fait qu'il n'utilise qu'une petite plage PP parmi les valeurs possibles;
- pour chaque valeur de niveau de gris 'i' une image d'entrée présente un nombre 'nᵢ' de pixels ayant cette valeur, si l'image comporte par exemple 512x512=262.144 pixels et qu'il y a 128 niveaux de gris possibles, il est clair que la somme des 'nᵢ' quand 'i' varie de 1 à 128 est de 262.144 ce qui est représenté par l'aire hachurée de la figure 1a.

Sur la figure 1a une première fonction de transfert connue FC1 est représentée; la droite FC1 définit un niveau de gris de sortie 'j' correspondant à chaque niveau de gris d'entrée 'i'; l'histogramme HSC1 de l'image de sortie résultante est représenté ici à titre illustratif bien que dans la méthode exposée l'histogramme de sortie n'est pas construit en tant que tel.

Sur la figure 1b une deuxième fonction de transfert connue FC2 est représentée; les surfaces extrêmes de l'histogramme ont été hachurées et les pixels correspondant de l'image d'entrée sont écrêtés et restitués avec les niveaux de gris extrêmes correspondant; le pourcentage total des pixels extrêmes écrêtés est de l'ordre de quelques %, par exemple 5%; il en résulte que la pente de la droite FC2 est supérieure à la pente de la droite FC1 et donc que l'image de sortie est encore plus contrastée que l'image d'entrée; l'histogramme de sortie HSC2 a aussi été représenté.

Sur la figure 2 une fonction de transfert FI selon l'invention est représentée.

La fonction de transfert FI est composée de trois parties :
- une partie droite EC située entre les points O et GB, cette partie correspond à l'écrêtage des faibles niveaux de gris
- une partie droite DI située entre deux valeurs de niveau de gris d'entrée niveau bas 'GB' et niveau haut 'GO'
- une partie courbe RCI située entre la valeur 'GO' et la valeur maximum PT; la courbe RCI est telle qu'elle accentue le contraste pour les pixels concernés, c'est par exemple une courbe du type 'racine carrée' ce qui est avantageux pour la simplicité des calculs en mode binaire.

La droite DI est définie par les deux points GB et GA; le point GB est situé sur l'axe horizontal et le point GA est situé sur la diagonale de pente égale à 1 c'est à dire sur la droite de transformation neutre.

Les niveaux de gris d'entrée GB et GO sont déterminés comme indiqué ci-après avec l'aide de la figure 3; premièrement on dénombre les 5% de pixels d'entrée étant les plus brillants c'est à dire ayant les niveaux de gris les plus élevés ce qui détermine le niveau de gris G5; avec l'exemple numérique déjà envisagé, 5% des pixels correspond à 5% de 262.144 soit 13.107 pixels. A partir de ce niveau GS on recherche combien de niveau de gris il faut franchir pour diminuer le nombre de pixels de 0,5% (soit 1.311 pixels); ceci revient à dire que l'on recherche un changement de pente significatif dans la courbe de l'histogramme; dans le cas ou il y a 128 niveaux de gris possibles, le franchissement de 5 niveaux peut être considéré comme un changement de pente significatif pour le cas considéré des images infra-rouge; si donc en passant de 5% à 4,5% on ne franchit pas plus de 5 niveaux, l'opération est recommencée entre 4,5% et 4% par pas de 0,5% jusqu'à trouver la valeur cherchée GO; si en arrivant au point G1 correspondant à 1% des pixels, un franchissement supérieur à 5 niveaux n'a pas été trouvé, on prend G1 comme valeur d'écrêtage; dans le cas général ici envisagé d'une image infra-rouge faiblement contrastée, le point GO est trouvé entre la valeur G5 (5%) et la valeur G1 (1%) des niveaux de gris; à partir de GO le point GA situé sur la diagonale, comme susdit, est déterminé.

Le point GB est déterminé de manière similaire en considérant les pixels les moins brillants et en recherchant de la même manière un changement de pente significatif entre 5% et 1% des pixels les moins brillants.

Sur la figure 2, la fonction de transfert représentée fournit une image de sortie composée de la manière suivante :
- les pixels d'entrée inférieurs à GB sont restitués avec le niveau de gris minimum
- les pixels d'entrée situés entre GB et GO sont restitués selon la transformation définie par la droite DI
- les pixels d'entrée situés entre GO et PT sont restitués selon la transformation définie par la courbe RCI, typiquement racine carrée.

La fonction de transfert globale FI ainsi définie correspond à un mode préférentiel conforme à l'invention mais d'autres variantes sont aussi possibles :
- sur la figure 2a, la fonction est simplement inversée FII et ce sont les pixels les moins brillants pour lesquels le contraste est augmenté.
- sur la figure 2b, (FIS), la fonction racine carrée a été introduite aux deux extrêmes ce qui augmente le contraste tant pour les objets noirs que pour les objets blancs; en contrepartie les pixels moyens ne sont pas modifiés puisque la partie droite est alors la transformation neutre selon la diagonale.

Quelle que soit la variante choisie de la fonction de transformation son implémentation dans un système statique ne présente pas de difficulté; un tel système doit clairement comporter au moins une mémoire pour mémoriser l'image d'entrée, des moyens de traitement pour exécuter (en statique) les étapes de la méthode, et une mémoire pour mémoriser l'image de sortie.

Dans un système dynamique, aussi appelé en "temps réel", il est également clair que le système comporte en outre d'une part une caméra de télévision et un convertisseur analogique/digital pour fournir l'image d'entrée, et d'autre part un convertisseur digital/analogique et des moyens d'affichage pour afficher l'image de sortie; un tel système dynamique fonctionne d'une manière connue à la cadence de la télévision c'est à dire de 25 images par seconde et de telles caméras infra-rouge sont bien connues de l'homme de métier qui sait que, compte-tenu des temps de traitement, les images de sortie sont affichées avec un léger retard de l'ordre de 1 ou 2 images ce qui ne présente pas d'inconvénient; l'utilisation de la méthode conforme à l'invention est, comme susdit, suffisamment rapide pour ne pas introduire de retard supplémentaire et sa mise en oeuvre dans un système ne présente pas de difficulté pour l'homme du métier.

En variante, les images d'entrée peuvent être fournies par un magnétoscope ou tout autre moyen adéquat; les images de sortie peuvent être affichées sur un écran, et/ou mémorisées sur un support adéquat.

## Revendications

1. Méthode numérique de modification d'image pour obtenir une image de sortie à partir d'une image d'entrée définie par un ensemble d'éléments d'image, ou pixels, chaque pixel comportant au moins une valeur numérique définissant son niveau de gris parmi un ensemble de valeurs possibles, la dite méthode comprenant :
- une première étape pour établir l'histogramme représentatif de la répartition en pourcentage des niveaux de gris des pixels de la dite image d'entrée,
- une deuxième étape pour établir, à partir des caractéristiques de répartition du dit histogramme, une fonction de correspondance entre les niveaux de gris d'entrée et de sortie,
- une troisième étape pour construire l'image de sortie sur la base des pixels de l'image d'entrée et de la dite fonction de correspondance, cette dernière consistant à écrêter des pixels ayant des niveaux de gris extrêmes et à redistribuer linéairement les niveaux de gris des pixels restants,
caractérisée en ce que l'écrêtage des pixels extrêmes s'effectue à partir d'une valeur de niveau de gris d'entrée spécifique pour chaque image et déterminée pendant la dite deuxième étape, la dite valeur étant choisie pour que le niveau de gris corresponde à un changement de pente significatif de la courbe de l'histogramme, lequel changement de pente est situé entre des premier et deuxième pourcentages cumulés prédéterminés, à une valeur de niveau de gris pour laquelle un changement de pourcentage cumulé de 0,5% demande au moins le franchissement de 5 niveaux de gris pour une échelle de niveaux de gris comportant 128 valeurs disponibles.

2. Méthode numérique de modification d'image selon la revendication 1, les niveaux de gris extrêmes étant soit brillants, soit noirs, caractérisée en ce que au moins les pixels d'entrée d'un des extrêmes sont restitués selon une fonction de transfert qui accentue le contraste.

3. Méthode numérique de modification d'image selon la revendication 1, caractérisée en ce que les pixels d'entrée des deux extrêmes sont restitués selon une fonction de transfert qui accentue le contraste.

4. Méthode numérique de modification d'image selon la revendication 2 ou 3 caractérisée en ce que la fonction de transfert qui accentue le contraste est la fonction "racine carrée".

5. Méthode numérique de modification d'image selon l'une quelconque des revendications précédentes caractérisée en ce que les dits premier et deuxième pourcentages cumulés prédéterminés sont 5% et 1%.

6. Méthode numérique de modification d'image selon l'une des revendications 1 à 5, caractérisée en ce que la valeur de niveau de gris est fixée à la valeur correspondant à 1% si le dit franchissement n'a pas été trouvé entre 5% et 1%.

7. Système numérique de modification d'image pour obtenir une image de sortie à partir d'une image d'entrée définie par un ensemble d'éléments d'image, ou pixels, chaque pixel comportant au moins une valeur numérique définissant son niveau de gris parmi un ensemble de valeurs possibles, le dit système comprenant :
- des moyens pour établir l'histogramme représentatif de la répartition en pourcentage des niveaux de gris des pixels de la dite image d'entrée,
- des moyens pour établir, à partir des caractéristiques de répartition du dit histogramme, une fonction de correspondance entre les niveaux de gris d'entrée et de sortie,
- des moyens pour construire l'image de sortie sur la base des pixels de l'image d'entrée et de la dite fonction de correspondance, cette dernière consistant à écrêter des pixels ayant des niveaux de gris extrêmes et à redistribuer linéairement les niveaux de gris des pixels restants,
caractérisée par un moyen pour effectuer l'écrêtage des pixels extrêmes à partir d'une valeur de niveau de gris d'entrée spécifique pour chaque image et déterminée pendant la dite deuxième étape, la dite valeur étant choisie pour que le niveau de gris corresponde à un changement de pente significatif de la courbe de l'histogramme, lequel changement de pente est situé entre un premier et un deuxième pourcentages cumulés prédéterminés, à une valeur de niveau de gris pour laquelle un changement de pourcentage cumulé de 0,5% demande au moins le franchissement de 5 niveaux de gris pour une échelle de niveaux de gris comportant 128 valeurs disponibles.

## Patentansprüche

1. Digitales Verfahren zur Bildveränderung, um ein Ausgangsbild aus einem Eingangsbild zu erhalten, das durch eine Menge von Bildelementen - oder Pixeln - festgelegt wird, wobei jedes Pixel mindestens einen digitalen Wert umfaßt, der seine Graustufe aus einer Menge möglicher Graustufenwerte festlegt, wobei dieses Verfahren folgendes umfaßt :
- Eine erste Phase zur Festlegung des Histogramms zur Darstellung der prozentualen Verteilung der Graustufen der Pixel des Eingangsbildes;
- Eine zweite Phase, um anhand der Verteilungsmerkmale des Histogramms eine Funktion festzulegen, die die Entsprechung zwischen den Graustufen des Eingangs und des Ausgangs wiedergibt;
- Eine dritte Phase, um das Ausgangsbild aus den Pixeln des Eingangsbildes und der Entsprechungsfunktion zu erzeugen, wobei diese letztere darin besteht, jene Pixel zu 'kappen', die extreme Graustufen aufweisen, und dann linear die Graustufen der restlichen Pixel neu zu verteilen,
dadurch gekennzeichnet, daß das Kappen der extremen Pixel ausgehend von einem spezifischen Eingangs-Graustufenwert für jedes Bild erfolgt, der während der zweiten Phase festgelegt wird, wobei dieser Wert im Hinblick darauf gewählt wird, daß die Graustufe einer signifikanten Neigungsänderung der Kurve des Histogramms entspricht, wobei diese Neigungsänderung zwischen einem kumulierten ersten und zweiten Prozentsatz liegt, der zuvor auf einen Wert der Graustufe festgelegt wurde, bei dem eine Änderung des kumulierten Prozentsatzes um 0,5 % mindestens das Überschreiten von 5 Graustufen bei einer Graustufenskala mit 128 zur Verfügung stehenden Werten erfordert.

2. Digitales Verfahren zur Bildveränderung nach Anspruch 1, wobei die extremen Graustufen entweder leuchtend oder schwarz vorliegen, dadurch gekennzeichnet, daß mindestens die Eingangs-Pixel eines der Extremwerte gemäß einer Übertragungsfunktion wiedergegeben werden, die den Kontrast verstärkt.

3. Digitales Verfahren zur Bildveränderung nach Anspruch 1, dadurch gekennzeichnet, daß die Eingangs-Pixel der beiden Extremwerte gemäß einer Übertragungsfunktion wiedergegeben werden, die den Kontrast verstärkt.

4. Digitales Verfahren zur Bildveränderung nach Anspruch 2 oder 3, dadurch gekennzeichnet, daß es sich bei der kontrastverstärkenden Übertragungsfunktion um die "Quadratwurzel"-Funktion handelt.

5. Digitales Verfahren zur Bildveränderung nach einem der vorhergehenden Ansprüche, dadurch gekennzeichnet, daß der kumulierte und vorherbestimmte erste und zweite Prozentsatz 5 % und 1% beträgt.

6. Digitales Verfahren zur Bildveränderung nach einem der Ansprüche 1 bis 5, dadurch gekennzeichnet, daß der Wert der Graustufe auf den Wert festgelegt wird, der 1% entspricht, sofern die Überschreitung nicht zwischen 5% und 1% gefunden wurde.

7. Digitales System zur Bildveränderung, um ein Ausgangsbild aus einem durch eine Menge von Bildelementen (oder Pixeln) festgelegten Eingangsbild zu erhalten, wobei jedes Pixel mindestens einen digitalen Wert umfaßt, der seine Graustufe aus einer Gesamtmenge möglicher Werte festlegt, wobei dieses System folgendes umfaßt:
- Mittel zum Erzeugen des Histogramms, das die prozentuale Verteilung der Graustufen der Pixel des Eingangsbildes darstellt;
- Mittel, um aus den Verteilungsmerkmalen des Histogramms eine Funktion für die Entsprechungen zwischen den Graustufen des Eingangs und des Ausgangs zu erstellen;
- Mittel zum Erzeugen des Ausgangsbildes anhand der Pixel des Eingangsbildes und der Entsprechungsfunktion, wobei diese Funktion darin besteht, jene Pixel zu kappen, die extreme Graustufen aufweisen, und die Graustufen der restlichen Pixel linear neuzuverteilen, dadurch gekennzeichnet, daß sie ein Mittel umfassen, um das Kappen der extremen Pixel anhand eines für jedes Bild spezifischen Eingangs-Graustufenwerts vorzunehmen, der während der zweiten Phase bestimmt wird, wobei dieser Wert so gewählt wird, daß die Graustufe einer signifikanten Änderung der Neigung der Kurve des Histogramms entspricht, und wobei diese Änderung der Neigung zwischen einem ersten und einem zweiten Prozentsatz liegt, die kumuliert und auf einen Graustufenwert vorherbestimmt werden, bei dem eine Änderung des kumulierten Prozentsatzes um 0,5% mindestens das Überschreiten von 5 Graustufen bei einer Grauwertskala, die 128 verfügbare Werte umfaßt, erfordert.

## Claims

1. A digital method of modifying an image to obtain an output image on the basis of an input image defined by a set of picture elements, denoted pixels hereinafter, each pixel comprising at least a digital value defining its grey level among a set of possible values, said method comprising:
- a first stage in which a histogram is established which is representative of the distribution in a percentage figure of the grey levels of the pixels of said input image,
- a second stage in which, on the basis of the distribution characteristics of said histogram, a correspondence function is established between the input and output grey levels,
- a third stage in which the output image is formed on the basis of the pixels of the input image and of said correspondence function, said correspondence function consisting of clipping the pixels having extreme grey levels and of linearly redistributing the grey levels of the remaining pixels, characterized in that clipping of the extreme pixels is effected on the basis of an input grey level value which is specific for each image and is determined during said second stage, said value being chosen so as to provide that the grey level corresponds to a change in the significant slope of the curve of the histogram, which change of slope is located between predetermined first and second accrued percentage figures at a grey-level value for which a change of the accrued percentage by 0.5 % requires at least the passage through 5 grey levels on a grey-level scale comprising 128 available values.

2. A digital method of modifying an image as claimed in Claim 1, in which the extreme grey levels are either bright or black, characterized in that at least the input pixels of one of the extremes are recovered in accordance with a transfer function which enhances the contrast.

3. A digital method of modifying an image as claimed in Claim 1, characterized in that the input pixels of the two extremes are recovered in accordance with a transfer function which enhances the contrast.

4. A digital method of modifying an image as claimed in Claim 2 or 3, characterized in that the transfer function which enhances the contrast is the "square root" function.

5. A digital method of modifying an image as claimed in any one of the preceding Claims, characterized in that said first and second accrued predetermined percentage figures are 5 % and 1 %.

6. A digital method of modifying an image as claimed in any one of the Claims 1 to 5, characterized in that the grey level value is fixed at the value corresponding to 1 % if said passage has not been found between 5 % and 1 %.

7. A digital system of modifying an image to obtain an output image on the basis of an input image defined by a set of picture elements, denoted pixels hereinafter, each pixel comprising at least a digital value defining its grey level among a set of possible values, said system comprising:
- means for establishing a histogram which is representative of the distribution in a percentage figure of the grey levels of the pixels of said input image,
- means for establishing, on the basis of the distribution characteristics of said histogram, a correspondence function between the input and output grey levels,
- means for forming the output image on the basis of the pixels of the input image and of said correspondence function, said correspondence function consisting of clipping the pixels having extreme grey levels and of linearly redistributing the grey levels of the remaining pixels, characterized by a means for clipping the extreme pixels on the basis of an input grey level value which is specific for each image and is determined during said second stage, said value being chosen so as to provide that the grey level corresponds to a change in the significant slope of the curve of the histogram, which change of slope is located between predetermined first and second accrued percentage figures at a grey-level value for which a change of the accrued percentage by 0.5 % requires at least the passage through 5 grey levels on a grey-level scale comprising 128 available values.
